# EUROPÄISCHE PATENTSCHRIFT

(11) **EP 2 140 156 B1**
(45) Veröffentlichungstag und Bekanntmachung des Hinweises auf die Patenterteilung: **23.11.2011**
(21) Anmeldenummer: 08718001.4
(22) Anmeldetag: 19.03.2008
(51) Int. Cl.: F16C 29/06, F16C 29/08, F16C 33/66

(54) **SCHMIERVORRICHTUNG FÜR EIN LINEARWÄLZLAGER**
LUBRICATING DEVICE FOR A LINEAR ROLLING BEARING
DISPOSITIF DE LUBRIFICATION POUR PALIER A ROULEMENT LINEAIRE

(30) Priorität: 23.03.2007 DE 102007013945
(43) Veröffentlichungstag der Anmeldung: 06.01.2010
(73) Patentinhaber: Schaeffler Technologies GmbH & Co. KG, 91074 Herzogenaurach (DE)
(72) Erfinder: NATALE, Mario, 66894 Bechhofen (DE); MENGES, Martin, 66424 Homburg (DE)
(86) Internationale Anmeldenummer: PCT/EP2008/053274
(87) Internationale Veröffentlichungsnummer: WO 2008/116805

(56) Entgegenhaltungen:
- EP-A- 1 760 342
- WO-A-93/12351
- DE-A1- 10 026 587
- DE-A1- 10 136 826
- DE-B3-102006 003 849
- DE-C1- 4 395 740
- US-A1- 2002 134 622

## Beschreibung

### Gebiet der Erfindung

Die Erfindung betrifft eine Schmiervorrichtung für ein Linearwälzlager, wobei das Linearwälzlager eine Führungsschiene und einen auf der Führungsschiene längsverschiebbaren Führungswagen aufweist, der über Wälzkörper auf der Führungsschiene abgestützt ist, die in Längsrillen der Führungsschiene entlang der Führungsschiene geführt sind, und wobei die Schmiervorrichtung zur Befestigung an dem Führungswagen und zur Schmierung der Längsrillen und/oder der Wälzkörper ausgebildet ist, mit Schmierstoffzuführungskanälen, welche ausgebildet sind, den Längsrillen einen Schmierstoff zuzuführen und endseitig im Bereich der Längsrillen freie Auslassdurchgänge zur Übergabe des Schmierstoffes an die Längsrillen aufweisen.

### Hintergrund der Erfindung

Derartige Schmiervorrichtungen werden eingesetzt, um bei Linearwälzlagern die Kontaktzonen zwischen den Laufflächen in dem Führungswagen, den belasteten Wälzkörpern und den Längsrillen als Gegenlaufflächen zu trennen bzw. zu schmieren. Bei üblichen Systemen sind mehrere Übergabestellen, wie z. B. Schmiernippel, zur Aufnahme der Schmierstoffe vorgesehen. Ausgehend von dem Schmiernippeln gelangt der Schmierstoff über ein System von Kanälen zu den Wälzkörpern, den Laufflächen oder den Gegenlaufflächen.

Die Druckschrift US2002/0134622A1, die wohl den nächstkommenden Stand der Technik bildet, behandelt eine Schmiervorrichtung für ein Linearwälzlager, welche im Betrieb die Längsrillen des Linearwälzlagers schmiert. Zur Schmierung sind vorgeschmierte Depotelemente vorgesehen. Die Depotelemente weisen abwechselnd elastische Organe, welche mit einem Schmierstoff vollgesogen sind, und Abstandshalter auf, welche zwischen den elastischen Organen angeordnet sind, um konkave Nuten mit den elastischen Organen zu bilden. Die konkaven Nuten sind im Betrieb ebenfalls mit Schmierstoff gefüllt.

Die Offenlegungsschrift DE 198 451 81 A1 beschreibt beispielsweise eine Schmiervorrichtung für ein Linearwälzlager, welche einen Öltank umfasst, der über sogenannte Ölspender den Schmierstoff zu den Laufbahnen der Wälzkörper befördert. Die Ölspender sind dabei aus einem faserigen oder porösen Material ausgebildet, welches die Wälzkörperlaufbahnen der Führungsschiene berührt und mit dem Schmierstoff benetzt.

Eine andere Art der Schmierstoffversorgung wird in der Offenlegungsschrift DE 198 285 87 A1 vorgeschlagen, welche ebenfalls eine Linearführungsvorrichtung mit Dauerschmierung betrifft. Zur Versorgung der Wälzkörper mit Schmierstoff ist in den Richtungsumkehrgängen, welche eine Endloszirkulation der Wälzkörper sicherstellen, ein Schmiermittelzufuhrloch vorgesehen, welches eine unmittelbare Versorgung der Wälzkörper mit Schmierstoff ermöglicht.

Die Druckschrift US 5,494,354, die als nächstkommender Stand der Technik angesehen wird, behandelt eine Linearführungsvorrichtung mit einer Schmiervorrichtung, welche einen über einen Schmiernippel befüllbaren Innenraum zur Aufnahme des Schmiermittels aufweist, welcher über offene Kanäle die Laufflächen mit dem Schmiermittel versorgt.

### Zusammenfassung der Erfindung

Der Erfindung liegt die Aufgabe zu Grunde, eine Schmiervorrichtung für ein Linearwälzlager vorzuschlagen, welche eine ausreichende und zugleich sparsame Schmierung sicherstellt.

Diese Aufgabe wird mit einer Schmiervorrichtung mit den Merkmalen des Anspruchs 1 gelöst. Bevorzugte oder vorteilhafte Ausführungsformen ergeben sich aus den Unteransprüchen, der nachfolgenden Beschreibung und den beigefügten Figuren.

Die erfindungsgemäße Schmiervorrichtung ist für ein Linearwälzlager geeignet und/oder ausgebildet, wobei das Linearwälzlager eine Führungsschiene und ein auf der Führungsschiene längs verschiebbaren Führungswagen aufweist. Der Führungswagen ist auf der Führungsschiene über Wälzkörper abgestützt, wobei die Wälzkörper vorzugsweise als Kugeln oder Rollen ausgebildet sind. Die Wälzkörper sind in Längsrillen der Führungsschienen entlang der Führungsschiene geführt, so dass der Führungswagen längs der Führungsschiene über die Wälzkörper abrollen kann. Vorzugsweise sind die Wälzkörper in dem Führungswagen ringförmig geführt, so dass diese eine Endloszirkulation in dem Führungswagen durchführen können.

Die Schmiervorrichtung ist zur Befestigung an dem Führungswagen und zugleich zur Schmierung der Längsrillen und/oder der Wälzkörper ausgebildet. Die Schmierung erfolgt über einen flüssigen oder zähflüssigen Schmierstoff, wie z. B. ein Schmieröl oder ein Schmierfett.

Die Schmiervorrichtung weist Schmierstoffzuführungskanäle auf, die ausgebildet sind, den Längsrillen der Führungsschienen den Schmierstoff zuzuführen und endseitig im Bereich der Längsrillen einen freien Auslassdurchgang zur Übergabe des Schmierstoffes an die Längsrillen aufweisen, wobei der Schmierstoff den Auslassdurchgang unbehindert durchqueren kann. Insbesondere sind in dem freien Auslassdurchgang keine weiteren Materialien angeordnet.

Erfindungsgemäß sind die Schmierstoffzuführungskanäle in ihrem Verlauf in einem Bedeckungsbereich von mindestens einem saugfähigen Depotelement abgedeckt, welches ausgebildet und/oder angeordnet ist, in dem Bedeckungsbereich Schmierstoff aufzunehmen und parallel zu dem Schmierstoffzuführungskanal zu den Längsrillen zu leiten, zu führen und/oder zu übergeben. Hierbei kann vorgesehen sein, dass jedem Schmierstoffzuführungskanal ein eigenes Depotelement zugeordnet ist, oder, dass mehrere oder alle Schmierstoffzuführungskanäle einem gemeinsamen Depotelement zugeordnet sind. Das Depotelement ist ausgebildet, um einen Schmierstofffluss von dem Bedeckungsbereich zu den Längsrillen strömungstechnisch parallel zu den Schmierstoffzuführungskanälen zu ermöglichen, aber auch gegebenenfalls einen Schmierstofffluss in die Gegenrichtung zu erlauben. Jedenfalls bildet das Depotelement eine schmierstoffleitende Verbindung zwischen Bedeckungsbereich und den Längsrillen der Führungsschiene. Die Schmierstoffzuführungskanäle sind in zwei Bereiche unterteilt, wobei ein erster Bereich, welcher mit einem Schmierstoffvorrat verbunden ist, als geschlossener Kanal ausgebildet ist und ein zweiter Bereich als zu dem oder den Depotelementen geöffneter Kanal realisiert ist.

Der Erfindung liegt die Überlegung zu Grunde, im Gegensatz zu den aus dem Stand der Technik bekannten Schmiervorrichtungen eine Mehrwegeschmierung, insbesondere eine Zweiwegeschmierung, zu realisieren. Die erfindungsgemäße Schmiervorrichtung erlaubt dabei, dass ein Teil des Schmierstoffs über die Schmierstoffzuführungskanäle direkt auf die Längsrillen, also die Oberfläche der Schienenlaufbahn gelangt. Ein weiterer Teil des Schmierstoffes wird zunächst über den Bedeckungsbereich in das bzw. die Depotelemente eingelagert. Der jeweilige Anteil zwischen direkter Schmierung und Speicherung ist dabei durch die geometrische Gestaltung der Schmierstoffzuführungskanäle, insbesondere im Bedeckungsbereich, einstellbar. Nachdem das bzw. die Depotelemente ebenfalls in Kontakt mit den Laufbahnen der Führungsschiene stehen, ist es zum einen möglich, bei Schmierstoffmangel auf den Laufbahnen eingelagerten Schmierstoff abzugeben. Zum anderen kann bei Schmierstoffüberschuss auf den Laufbahnen dieser durch die Depotelemente aufgenommen werden und im Sinne eines Depots innerhalb des oder der Elemente gespeichert werden. Weitere optionale Vorteile der Schmiervorrichtung sind, dass eine sehr feine Dosierung des zugeführten Schmierstoffs ermöglicht wird. Da der zuviel zugeführte Schmierstoff in dem oder den Depotelementen gebunden bzw. von diesen wieder aufgesammelt und gespeichert wird, wird ein unterschiedlicher Schmierstoffverbrauch, welcher von dem Belastungsgrad der jeweiligen Laufbahn abhängig ist, ausgeglichen. Zudem ist über die erfindungsgemäße Schmiervorrichtung die Schmierstoffversorgung unabhängig von der Einbaulage der Schmiervorrichtung und somit des Führungswagens sichergestellt, wobei zugleich der Schmierstoff verbrauchsgerecht zugeführt wird. Diese Vorteile führen dazu, dass deutlich längere Nachschmierintervalle bei deutlich geringer zugeführten Schmierstoffvolumen gegenüber den sonst üblichen Systemen realisiert werden können.

Bei einer bevorzugten Ausführungsform ist das saugfähige Depotelement aus einem porösen und/oder kapillaren Material ausgebildet. Beispielsweise kann poröses Kunstharz, Polymermaterial, Sintermaterial, Dochtmaterial oder Moosgummi eingesetzt werden. Insbesondere ist das Material der Depotelemente ausgebildet, Schmierstoff zwischenzuspeichern und/oder zeitverzögert frei zu geben. Vorzugsweise hat das Material der Depotelemente die Eigenschaft, Bereiche unterschiedlicher Schmierstoffkonzentration durch Kapillareffekte auszugleichen.

Bei einer bevorzugten Realisierung der Erfindung schließt sich der oder die Bedeckungsbereiche an einen geschlossenen Bereich der Schmierstoffzuführungskanäle an und erstreckt sich als zu dem oder zu den Depotelementen geöffneter Kanal bis zu dem freien bzw. bis zu den freien Auslassdurchgängen.

Bei besonders praxisnahen Ausführungsformen weist die Schmiervorrichtung zwei oder vier Auslassdurchgänge auf, wobei bevorzugt zwei Auslassdurchgänge verwendet werden, wenn der Führungswagen über zwei Wälzkörpergruppen und vier Auslassdurchgänge verwendet werden, wenn der Führungswagen über vier Wälzkörpergruppen abgestützt ist.

Bei einer insbesondere wartungsfreundlichen Ausführungsform der Erfindung sind im Verlauf der Schmierstoffzuführungskanäle Rückschlag- und/oder Einwegventile angeordnet. Diese Ventile verhindern ein Leerlaufen der Schmierkanäle in dem Bereich nach den Ventilen bei Abfall des Schmierdrucks. Daraus ergibt sich der Vorteil, dass bei erneuter Befüllung der Schmiervorrichtung mit Schmierstoff die strömungstechnisch nach den Ventilen angeordneten Schmierstoffzuführungskanalbereiche nicht nachgefüllt werden müssen, da diese durch die sich einstellende Kapillarwirkung befüllt bleiben.

Bei einer Weiterbildung der Erfindung sind die Depotelemente in Längsrichtung der Führungsschiene, also stirnseitig, durch Schutzplatten zumindest abschnittsweise abgedeckt. Diese Schutzplatten dienen zur Protektion der Depotelemente vor Verschmutzung. Die Schutzplatten können so angeordnet sein, dass das jeweilige Depotelement teilweise oder sogar ganz umfasst ist. Vorzugsweise sind Schutzplatte und zugeordnetes Depotelement in der Randkontur zumindest im Bereich der Führungsschiene deckungsgleich ausgebildet. Um die Schmiervorrichtung und/oder den Führungswagen vor Schmutzpartikeln zu schützen, sind die Schutzplatten bevorzugt - zumindest abschnittsweise - aus einem Material ausgebildet, welches ein Einbetten von Schmutzpartikeln zulässt bzw. fördert.

Bei einer Weiterführung der Erfindung sind die Depotelemente in Längsrichtung der Führungsschiene mehrlagig aufgebaut. Vorzugsweise ist dabei vorgesehen, dass die einzelnen Lagen der Depotelemente sich durch eine unterschiedliche Saugfähigkeit unterscheiden. Bei einer alternativen Ausführungsform sind einzelne Lagen der Depotelemente und Schutzplatten in beliebiger Reihenfolge wechselnd oder alternierend angeordnet. Hierdurch wird eine mehrfache Schichtung bestehend aus Depotelementen und Schutzplatten ausgeführt, wobei neben alternierenden Anordnungen auch mehrfache Schichtungen von Depotelementen bzw. Schutzelementen möglich sind.

Optional ist das Material der Schutzplatten so ausgeführt, dass Schmierstoff eingelagert werden kann. Zur Steuerung des Schmierstoffaustauschs zwischen Depotelement und Schutzplatte sind diese vorzugsweise durch ein zusätzliches Element ganz oder auch in Teilbereichen voneinander getrennt. Es ist allgemein bevorzugt, dass die Schmiervorrichtung so ausgeführt ist, dass die Depotelemente und/oder die Schutzplatten austauschbar angeordnet sind.

Optional weist die Schmiervorrichtung eine oder mehrere Stelleinrichtungen auf, die ausgebildet ist bzw. sind, das Depotelement so zu verformen, so dass der freie Querschnitt der Schmierstoffzuführungskanäle im Bedeckungsbereich verändert wird. Vorzugsweise ist das Material der Depotelemente elastisch ausgebildet, so dass dieses in den angrenzend angeordneten Bereich der Schmierstoffzuführungskanäle teilweise eingedrückt werden kann, wobei dessen Strömungsquerschnitt beeinflusst wird. Auf diese Weise ist durch die Steileinrichtung der Volumenstrom des Schmierstoffs in den Schmierstoffzuführungskanälen einstellbar. Bevorzugt ist die Stelleinrichtung von der Außenseite der Schmiervorrichtung betätigbar. Bei einer besonders bevorzugten Weiterbildung ist die Stelleinrichtung elektrisch steuerbar, so dass der Schmierstofffluss automatisiert eingestellt werden kann. Bei einer weiteren Entwicklung der Erfindung ist jedem Schmierstoffzuführungskanal und/oder jeder Längsrille der Führungsschiene eine der Stelleinrichtungen zugeordnet. Bei einer Ausbildung mit elektrisch steuerbaren Stelleinrichtungen kann durch diese Zuordnung und eine geeignete Steuerung jeder Längsrille bzw. jedem Schmierstoffzuführungskanal eine individuell eingestellte Schmierstoffmenge zugeordnet werden, wobei die Verteilung beispielsweise in Abhängigkeit der Belastung selektiv steuerbar ist bzw. gesteuert wird.

Eine Weiterbildung der Erfindung sieht vor, dass die Schmiervorrichtung eine Wälzkörperumlenkung aufweist, welche eine Endloszirkulation der Wälzkörper in den Führungswagen ermöglicht, wobei die Wälzkörperumlenkung vorzugsweise als eine U-förmige Kugel- oder Rollenbahn ausgebildet ist. Bei dieser Weiterbildung sind in der Wälzkörperumlenkung Fenster zur Übergabe von Schmierstoff an die Wälzkörper eingebracht. Bevorzugt befinden sich die Fenster im Scheitelpunkt, insbesondere im außenseitigen Scheitelpunkt der Wälzkörperumlenkung. Durch die Fenster ist es möglich, dass die Wälzkörper beim Umlauf an einer Kontaktstelle direkt an dem Depotelement vorbeistreifen und dadurch mit Schmierstoff benetzt werden. Alternativ hierzu sind die Fenster als freie Durchgänge ausgebildet, so dass Schmierstoff aus den Schmierstoffzuführungskanäle ungehindert durch die Fenster zu den Wälzkörpern gelangt. Als weitere Alternative kann Schmierstoff über die Kontaktstelle des Depotelements und ergänzend bzw. strömungstechnisch parallel direkt durch die Schmierstoffzuführungskanäle unter dem Depotelement in den Wälzkörperumlauf gelangen. In Anlehnung der vorher verwendeten Nomenklatur liegt eine Dreiwegeschmierung vor. Auch das bzw. die Fenster in der Wälzkörperumlenkung haben den Vorteil, dass entweder die Wälzkörper mit zusätzlichem Schmierstoff beaufschlagt werden oder bereits zuviel zugeführter Schmierstoff über die zuvor beschriebene Kontaktstelle wieder in das Depotelement eingelagert werden kann.

Konstruktiv betrachtet ist die Schmiervorrichtung bevorzugt als ein Joch oder ein "U" ausgebildet, wobei die freien Schenkel für ein Umgreifen der Führungsschiene dimensioniert sind. Die Schmiervorrichtung ist bevorzugt einstückig ausgebildet und umfasst insbesondere die Wälzkörperumlenkung und wird stirnseitig auf den Führungswagen aufgesetzt und z. B. über Hakenelemente an diesem formschlüssig und/oder kraftschlüssig befestigt. Die offenen Bereiche der Schmierstoffzuführungskanäle sind bevorzugt stirnseitig, insbesondere an der freien Stirnseite der Schmiervorrichtung angeordnet.

Für eine bessere Steuerung des Schmierstoffübertrags von den Schmierstoffzuführungskanälen auf die Depotelemente ist vorzugsweise vorgesehen, dass vor jedem Auslassdurchgang und/oder vor den Auslassdurchgängen eines Schenkels der Schmiervorrichtung die Schmierstoffzuführungskanäle im Bedeckungsbereich eine Verbreiterung aufweisen, so dass mit der Größe der Verbreiterung der Schmierstoffübertrag geometrisch einstellbar ist.

Insgesamt ist es durch den geschilderten Aufbau zum einen möglich, durch die Schmierstoffzuführungskanäle den Schmierstoff direkt auf die Laufbahnen aufzubringen, was insbesondere bei neuen Führungseinheiten mit erhöhtem Schmierstoffbedarf in der Einlaufperiode wichtig ist. Zum anderen wird durch den direkten Kontakt des bzw. der Depotelemente zum Schmierstoffzuführungskanal diese mit Schmierstoff benetzt. Durch die Schmierstoffzuführungskanäle auf direktem Weg zuviel auf die Oberfläche der Führungsschiene gelangte Schmierstoff wird durch die Depotelemente aufgesammelt und eingelagert und kann so zeitversetzt zugeführt werden.

### Kurze Beschreibung der Zeichnungen

Weitere Merkmale, Vorfälle und Wirkung der Erfindung ergeben sich aus der nachfolgenden Beschreibung bevorzugter Ausführungsbeispiele der Erfindung. Dabei zeigen:
- Figur 1: eine schematische Explosionszeichnung in dreidimensionaler Darstellung einer Schmiervorrichtung als ein Ausführungsbeispiel der Erfindung;
- Figur 2: eine abgewandelte Ausführungsform der Schmiervorrichtung in Figur 1 ebenfalls in schematischer Explosionsdarstellung in dreidimensionaler Ansicht von der Rückseite;
- Figur 3: ein Detail in Figur 2 in dreidimensionaler Darstellung.

Einander entsprechende Teile sind in den Figuren jeweils mit den gleichen Bezugszeichen versehen.

### Detaillierte Beschreibung der Zeichnungen

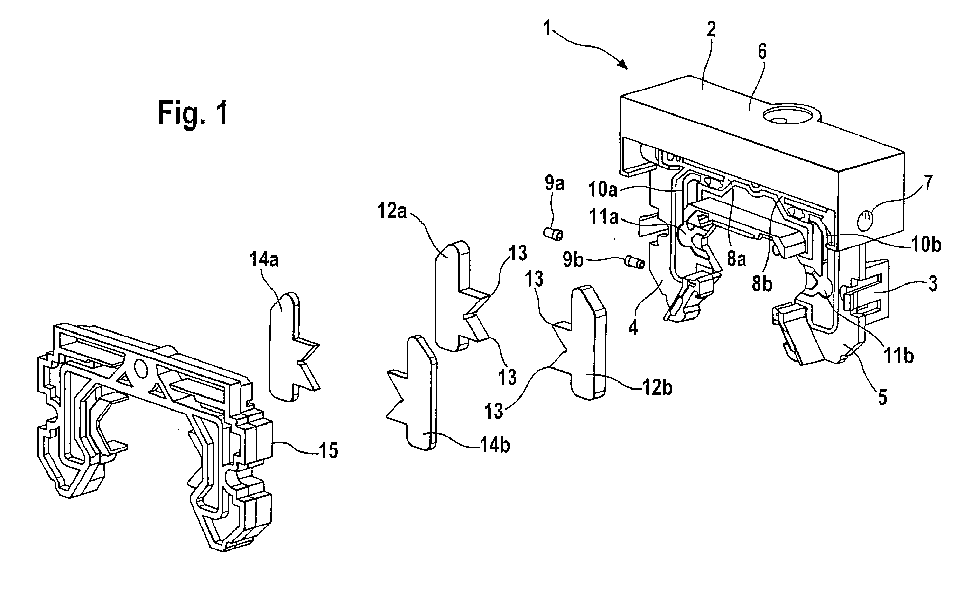

Die Figur 1 zeigt in einer schematischen Explosionszeichnung in dreidimensionaler Darstellung eine Schmiervorrichtung 1, welche ein Gehäuse 2 umfasst, das mittels Befestigungsvorrichtungen, in diesem Fall Klipse 3 an einem nicht dargestellten Führungswagen eines Linearwälzlagers befestigbar ist.

Das Gehäuse 2 ist einstückig ausgebildet und U- oder jochförmig mit zwei freien Schenkeln 4, 5 und einer Brücke 6, welche die beiden Schenkel 4 und 5 verbindet, realisiert. Der durch Schenkel 4 und 5 sowie Brücke 6 gebildete Freiraum ist so dimensioniert, dass eine nicht dargestellte Führungsschiene zumindest abschnittsweise umgriffen wird.

Zur Versorgung der Führungsschiene, insbesondere von Laufrillen der Führungsschiene für die Wälzkörper, weist das Gehäuse 2 ein Anschlussgewinde 7 für Schmierstoffzuleitungen auf, die beispielsweise als Schmiernippel ausgebildet sind. Ausgehend von dem Anschlussgewinde 7 wird der Schmierstoff in einen optionalen Vorratstank in der Brücke 6 des Gehäuses 2 geführt.

Im weiteren Verlauf wird der Schmierstofffluss in zwei geschlossene Schmierstoffzuführungskanalabschnitte 8a und 8b aufgeteilt, die endseitig jeweils mit einem Einweg- bzw. Rückschlagventil 9a bzw. 9b abgeschlossen sind. Im Schmierstofffluss nach dem Ventil 9 a bzw. b sind die Schmierstoffzuführkanäle als stirnseitig geöffnete Nuten 10 a bzw. 10 b ausgebildet, die zunächst parallel zur Längserstreckung der Schenkel 4 bzw. 5 verlaufen und schließlich in einem rund ausgebildeten, ebenfalls stirnseitig geöffneten Bedeckungsbereich 11a bzw. 11 b münden. Ausgehend von dem Bedeckungsbereich 11a, 11 b erstrecken sich jeweils zwei nutartige Abschnitte, die ebenfalls stirnseitig geöffnet sind, und endseitig auch zu dem durch Schenkel 4 und 5 und Brücke 6 gebildeten Innenraum geöffnet sind.

Für den Bereich, in dem die Schmierstoffzuführungskanäle nutartig und stirnseitig geöffnet ausgebildet sind, ist für jeden Schenkel 4 bzw. 5 ein Depotelement 12 a bzw. b vorgesehen, welches als flaches, plattenartiges Bauteil ausgebildet ist. Die Depotelemente 12 a bzw. b bestehen jeweils aus einem Material, welches saugfähig ist und die Eigenschaft hat, Bereiche unterschiedlicher Schmierstoffkonzentration innerhalb der Depotelemente 12 a bzw. b durch Kapillareffekte auszugleichen. Die Kontur der Depotelemente 12 a bzw. b ist an das Gehäuse 2 angepasst, so dass diese die nutartigen und stirnseitig geöffneten Bereiche der Schmierstoffzuführungskanäle vollständig abdecken. Die Depotelemente 12 a bzw. b weisen jeweils zwei im Querschnitt dreiecksförmige Nasen 13 auf, welche dimensioniert sind, dass diese in die Führungsrillen der nicht dargestellten Führungsschiene eingreifen und in direktem Kontakt mit der Schienenlaufbahn stehen.

Im eingebauten Zustand ist es nun zum einen möglich, dass Schmierstoff über die nutartig, stirnseitig geöffneten Schmierstoffzuführungskanäle über das endseitige Fenster direkt auf die Schienenlaufbahnen der Laufschiene übertragen wird, oder parallel dazu, zunächst von den nutartigen, stirnseitig geöffneten Schmierstoffzuführungskanälen an die Depotelemente 12 a, b übergeben wird, in diesen aufgrund der Kapillarwirkung zu den Nasen 13 transportiert wird und von den Nasen 13 auf die Oberfläche der Schienenlaufbahn aufgetragen wird. Es liegt somit eine effektive Zweiwegeschmierung vor. Der Grad des Schmierstoffübertrags von den Schmierstoffzuführungskanälen zu den Depotelementen ist dabei durch die geometrische Ausbildung der Zuführungskanäle und insbesondere der Bedeckungsbereiche 11 a bzw. b bestimmt. Durch den gezeigten Aufbau ist es demnach möglich, durch die Schmierstoffzuführungskanäle Schmierstoff direkt auf die Laufbahnen der Führungsschiene aufzubringen, zum anderen wird durch den direkten Kontakt der Depotelemente 12 a, b zu den offenen Schmierstoffzuführungskanälen diese mit Schmierstoff getränkt. Die Depotelemente 12 a bzw. b haben die Eigenschaft, durch die Schmierstoffzuführungskanäle zu viel aufgetragenen Schmierstoff wieder aufzusammeln und einzulagern und gegebenenfalls zeitversetzt insbesondere an die Laufbahnen der Führungsschiene zuzuführen.

Zur mechanischen Sicherung der Depotelemente 12 a, b sind Schutzplatten 14 a, b vorgesehen, welche ebenfalls plattenförmig ausgebildet sind und von der Kontur im Wesentlichen deckungsgleich zu den Depotelementen 12 a, 12 b realisiert sind. Bei einer bevorzugten Ausführungsform ist das Material der Schutzplatten 14 a, b Schmutzpartikel bindend und/oder ebenfalls saugend ausgebildet, so dass auch die Schutzplatten 14 a, b Schmierstoff aufnehmen und gegebenenfalls zeitverzögert wieder abgeben können. Das Gehäuse 2 wird durch eine Platte 15 abgedeckt und gegebenenfalls flüssigkeitsdicht verschlossen. Selbstverständlich sind in dem Gehäuse 2 weitere Dichtungen angeordnet, um den Schmierstoff nicht unkontrolliert austreten zu lassen.

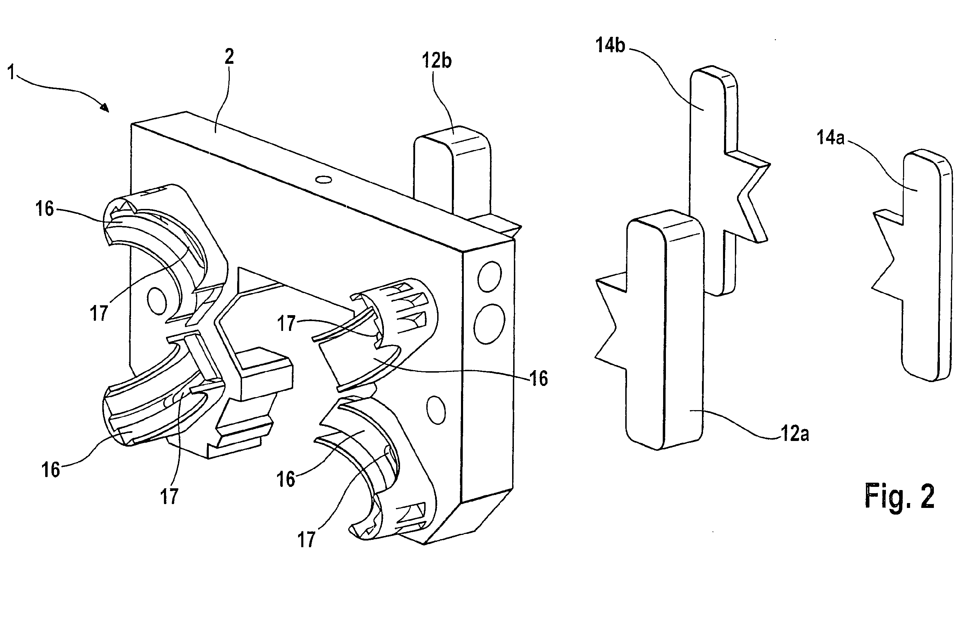

Die Abbildung 2 zeigt eine Explosionsansicht in dreidimensionaler Darstellung einer Schmiervorrichtung 1 eines zweiten Ausführungsbeispiels der Erfindung, diesmal von der gegenüberliegenden Seite, wobei die in der Darstellung der Figur 2 abgewandte Seite den gleichen Aufbau wie die Schmiervorrichtung 1 in der Figur 1 einnehmen kann. Die Rückseite des Gehäuses 2 zeigt dagegen vier Umlenkbereiche 16 eines Wälzkörperumlaufs, die dazu dienen, die Wälzkörper in der Kugelumlaufeinheit des Führungswagens in bekannter Weise umzulenken. Insbesondere sind die Umlenkbereiche 16 einstückig mit dem Gehäuse 2 verbunden. Jeweils am Scheitelpunkt des Umlenkradius in den Umlenkbereichen 16 ist ein Fenster 17 eingebracht, welches eine schmierstoffleitende Verbindung zu den Schmierstoffzuführungskanälen und/oder zu den Depotelementen 12 a, b und/oder den Bedeckungsbereichen 11 a, b schafft und auf diese Weise eine Dreiwegeschmierung realisiert. Durch die Fenster 17 ist möglich, sowohl eine Schmierstoffzuführung als auch eine Schmierstoffabführung in den Umlenkbereichen 16 durchzuführen. Bei der Schmierstoffabführung wird den Wälzkörpern zuviel zugeführter Schmierstoff über den Bedeckungsbereich 11 a bzw. b in die Depotelemente 12 a, b eingelagert, um diesen zu einem späteren Zeitpunkt abzugeben.

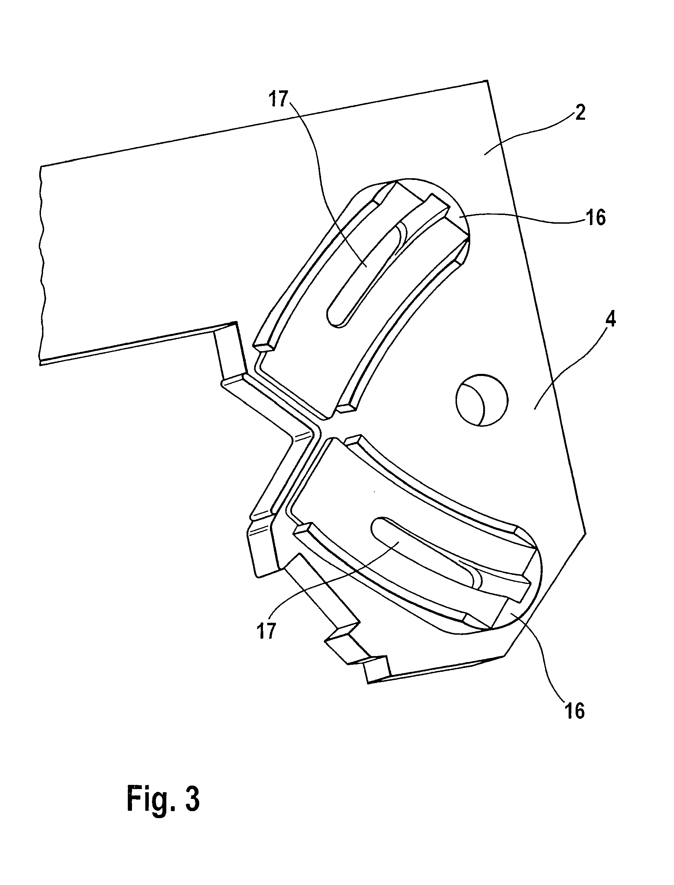

Die Figur 3 zeigt einen Detailausschnitt in der Figur 2 des Gehäuses 2 im Bereich des rechten Schenkels 4, wobei die Umlenkbereiche 16 und die darin eingeformten Fenster 17 nochmals deutlich zu erkennen sind. Aus der Darstellung ist zudem zu entnehmen, dass die eingeformten Fenster 17, eine längliche Form aufweisen.

**Bezugszeichen**
- 1: Schmiervorrichtung
- 2: Gehäuse
- 3: Klipse
- 4,5: Schenkel
- 6: Brücke
- 7: Anschlussgewinde
- 8 a, b: geschlossene Schmierstoffführungskanalbereiche
- 9 a, b: Rückschlagventil
- 10 a, b: Nuten
- 11 a, b: Bedeckungsbereich
- 12 a, b: Depotelement
- 13: Nasen
- 14 a, b: Schutzplatten
- 15: Platte
- 16: Umlenkbereich
- 17: Fenster

## Patentansprüche

1. Schmiervorrichtung (1) für ein Linearwälzlager, wobei das Linearwälzlager eine Führungsschiene und einen auf der Führungsschiene längsverschieblichen Führungswagen aufweist, der über Wälzkörper auf der Führungsschiene abgestützt ist, die in Längsrillen der Führungsschiene entlang der Führungsschiene geführt sind, und wobei die Schmiervorrichtung (1) zur Befestigung an dem Führungswagen und zur Schmierung der Längsrillen und/oder der Wälzkörper ausgebildet ist, mit Schmierstoffzuführungskanälen (8 a, b, 10 a, b), welche ausgebildet sind, den Längsrillen einen Schmierstoff zuzuführen, und endseitig im Bereich der Längsrillen freie Auslassdurchgänge zur Übergabe des Schmierstoffes an die Längsrillen aufweisen, wobei die Schmierstoffzuführungskanäle (8 a, b, 10 a, b) in ihrem Verlauf in Bedeckungsbereichen (11 a, b) von mindestens einem saugfähigem Depotelement (12 a, b) abgedeckt sind, welches ausgebildet und/oder angeordnet ist, in den Bedeckungsbereichen (11 a, b) Schmierstoff aufzunehmen und parallel zu den Schmierstoffzuführungskanälen (10 a, b) zu den Längsrillen zu leiten, **dadurch gekennzeichnet, daß** die Schmierstoffzuführungskanäle einen ersten geschlossenen Kanalbereich (8 a, b), welcher mit einem Schmierstoffvorrat verbunden ist, und einen zweiten Kanalbereich (10 a, b) aufweisen, der als zu dem oder den Depotelementen (12 a, b) geöffneter Kanal realisiert ist..

2. Schmiervorrichtung (1) nach Anspruch 1, **dadurch gekennzeichnet, dass** das saugfähige Depotelement (12 a b) poröses Material, poröses Kunstharz, Polymermaterial, Sintermaterial, Dochtmaterial, Moosgummi und/oder kapillares Material aufweist.

3. Schmiervorrichtung (1) nach Anspruch 1 oder 2, **dadurch gekennzeichnet, dass** die Bedeckungsbereiche (11a, b) sich an geschlossene Bereiche (8 a, b) der Schmierstoffzuführungskanäle anschließen und sich als offene Kanäle (10 a, b) bis zu den freien Auslassdurchgängen erstrecken.

4. Schmiervorrichtung (1) nach einem der vorhergehenden Ansprüche, **gekennzeichnet durch** zwei oder vier freie Auslassdurchgänge.

5. Schmiervorrichtung (1) nach einem der vorhergehenden Ansprüche, **dadurch gekennzeichnet, dass** im Verlauf der Schmierstoffzuführungskanäle (8 a, b, 10 a, b) Rückschlag- und/oder Einwegventile angeordnet sind.

6. Schmiervorrichtung (1) nach einem der vorhergehenden Ansprüche, **dadurch gekennzeichnet, dass** das mindestens eine Depotelement (12 a, b) in Längsrichtung der Führungsschiene durch mindestens eine Schutzplatte (14 a, b) zumindest abschnittsweise abgedeckt ist.

7. Schmiervorrichtung (1) nach Anspruch 6, **dadurch gekennzeichnet, dass** die Schutzplatte (14 a, b) zumindest in einem Randbereich oder Kontaktbereich mit der Führungsschiene aus einem schmutzpartikelaufnehmenden Material besteht.

8. Schmiervorrichtung (1) nach einem der vorhergehenden Ansprüche, **dadurch gekennzeichnet, dass** das Depotelement (12 a, b) in Längsrichtung der Führungsschiene mehrlagig aufgebaut ist.

9. Schmiervorrichtung (1) nach einem der Ansprüche 6 bis 8, **dadurch gekennzeichnet, dass** mehrere Depotelemente (12 a, b) und mehrere Schutzplatten (14 a, b) wechselnd oder alternierend angeordnet sind.

10. Schmiervorrichtung (1) nach einem der vorhergehenden Ansprüche, **gekennzeichnet durch** eine Stelleinrichtung, die ausgebildet ist, das Depotelement (12 a, b) zu verformen, so dass der freie Querschnitt der Schmierstoffzuführungskanäle (10 a, b) im Bedeckungsbereich (11 a, b) verändert wird.

11. Schmiervorrichtung (1) nach Anspruch 10, **dadurch gekennzeichnet, dass** die Stelleinrichtung elektrisch steuerbar ist.

12. Schmiervorrichtung (1) nach Anspruch 10 oder 11, **dadurch gekennzeichnet, dass** jeder Längsrille der Führungsschiene eine der Stelleinrichtungen zugeordnet ist und/oder dass jeweils eine der Stelleinrichtungen ausschließlich einer Längsrille zugeordnet ist.

13. Schmiervorrichtung (1) nach einem der vorhergehenden Ansprüche, **dadurch gekennzeichnet, dass** die Schmiervorrichtung (1) eine Wälzkörperumlenkung (16) aufweist, welche eine Endloszirkulation der Wälzkörper in dem Führungswagen ermöglicht, wobei in der Wälzkörperumlenkung Fenster (17) zur Übergabe von Schmierstoff an die Wälzkörper eingebracht sind.

14. Schmiervorrichtung (1) nach einem der vorhergehenden Ansprüche, **gekennzeichnet durch** eine jochartige Ausbildung, wobei die freien Schenkel (4, 5) für ein Umgreifen der Führungsschiene ausgebildet sind.

15. Schmiervorrichtung (1) nach einem der vorhergehenden Ansprüche, **dadurch gekennzeichnet, dass** vor jedem Auslassdurchgang und/oder vor den Auslassdurchgängen eines Schenkels (4, 5) der Schmiervorrichtung (1) die Schmierstoffzuführungskanäle (10 a, b) im Bedeckungsbereich (12 a, b) eine Verbreiterung aufweisen, um den Transport des Schmierstoffes zwischen den Schmierstoffzuführungskanälen (10 a, b) und dem Depotelement (12 a, b) zu verbessern.

## Claims

1. Lubricating device (1) for a linear rolling bearing, the linear rolling bearing having a guide rail and a guide carriage which is displaceable longitudinally on the guide rail and which is supported on the guide rail via rolling bodies which are guided along the guide rail in longitudinal grooves of the guide rail, and the lubricating device (1) being designed to be fastened to the guide carriage and for lubricating the longitudinal grooves and/or the rolling bodies, with lubricant supply ducts (8 a, b, 10 a, b) which are designed to supply a lubricant to the longitudinal grooves and which have on the end face, in the region of the longitudinal grooves, free outlet passages for the transfer of the lubricant to the longitudinal grooves, the lubricant supply ducts (8 a, b, 10 a, b) being covered along their run, in covering regions (11 a, b), by at least one absorbent repository element (12 a, b) which is designed and/or arranged to take up lubricant in the covering regions (11 a, b) and conduct it, parallel to the lubricant supply ducts (10 a, b), to the longitudinal grooves, **characterized in that** the lubricant supply ducts have a first closed duct region (8 a, b), which is connected to a lubricant stock, and a second duct region (10 a, b), which is implemented as a duct open to the repository element or repository elements (12 a, b).

2. Lubricating device (1) according to Claim 1, **characterized in that** the absorbent repository element (12 a, b) has porous material, porous synthetic resin, polymer material, sintered material, wick material, microcellular rubber and/or capillary material.

3. Lubricating device (1) according to Claim 1 or 2, **characterized in that** the covering regions (11 a, b) are contiguous to closed regions (8 a, b) of the lubricant supply ducts and extend as open ducts (10 a, b) as far as the free outlet passages.

4. Lubricating device (1) according to one of the preceding claims, **characterized by** two or four free outlet passages.

5. Lubricating device (1) according to one of the preceding claims, **characterized in that** nonreturn and/or one-way valves are arranged along the run of the lubricant supply ducts (8 a, b, 10 a, b).

6. Lubricating device (1) according to one of the preceding claims, **characterized in that** the at least one repository element (12 a, b) is covered at least in portions, in the longitudinal direction of the guide rail, by at least one protective plate (14 a, b).

7. Lubricating device (1) according to Claim 6, **characterized in that** the protective plate (14 a, b) consists, at least in a marginal region or contact region with the guide rail, of a material absorbing dirt particles.

8. Lubricating device (1) according to one of the preceding claims, **characterized in that** the repository element (12 a, b) has a multiple-ply set-up in the longitudinal direction of the guide rail.

9. Lubricating device (1) according to one of Claims 6 to 8, **characterized in that** a plurality of repository elements (12 a, b) and a plurality of protective plates (14 a, b) are arranged reciprocally or alternately.

10. Lubricating device (1) according to one of the preceding claims, **characterized by** an actuating means which is designed to deform the repository element (12 a, b) such that the free cross section of the lubricant supply ducts (10 a, b) is modified in the covering region (11 a, b).

11. Lubricating device (1) according to Claim 10, **characterized in that** the actuating means can be controlled electrically.

12. Lubricating device (1) according to Claim 10 or 11, **characterized in that** each longitudinal groove of the guide rail is assigned one of the actuating means, and/or **in that** in each case one of the actuating means is assigned exclusively one longitudinal groove.

13. Lubricating device (1) according to one of the preceding claims, **characterized in that** the lubricating device (1) has a rolling body deflection (16) which allows an endless circulation of the rolling bodies in the guide carriage, apertures (17) for the transfer of lubricant to the rolling bodies being introduced in the rolling body deflection.

14. Lubricating device (1) according to one of the preceding claims, **characterized by** a yoke-like design, the free legs (4, 5) being designed for surrounding the guide rail.

15. Lubricating device (1) according to one of the preceding claims, **characterized in that** the lubricant supply ducts (10 a, b) have a widening in the covering region (12 a, b) upstream of each outlet passage and/or upstream of the outlet passages of one leg (4, 5) of the lubricating device (1), in order to improve the transport of lubricant between the lubricant supply ducts (10 a, b) and the repository element (12 a, b).

## Revendications

1. Dispositif de lubrification (1) pour un palier à roulement linéaire, dans lequel le palier à roulement linéaire présente un rail de guidage et un chariot de guidage mobile longitudinalement sur le rail de guidage et qui est supporté sur le rail de guidage par des corps de roulement, qui sont guidés dans des rainures longitudinales du rail de guidage le long du rail de guidage, et dans lequel le dispositif de lubrification (1) est réalisé en vue de sa fixation sur le chariot de guidage et de la lubrification des rainures longitudinales et/ou des corps de roulement, avec des canaux d'amenée de lubrifiant (8a, b, 10a, b) qui sont réalisés en vue d'amener un lubrifiant aux rainures longitudinales, et qui présentent à l'extrémité, dans la région des rainures longitudinales, des passages de sortie libres pour transférer le lubrifiant aux rainures longitudinales, dans lequel les canaux d'amenée de lubrifiant (8a, b, 10a, b) sont couverts, sur leur trajet, dans des zones de recouvrement (11a, b), par au moins un élément de dépôt absorbant (12a, b), qui est réalisé et/ou disposé en vue de prélever du lubrifiant dans les zones de recouvrement (11a, b) et le conduire aux rainures longitudinales parallèlement aux canaux d'amenée de lubrifiant (10a, b), **caractérisé en ce que** les canaux d'amenée de lubrifiant présentent une première zone de canal fermée (8a, b), qui est raccordée à une réserve de lubrifiant, et une deuxième zone de canal (10a, b), qui est réalisée sous la forme d'un canal ouvert vers le ou les élément(s) de dépôt (12a, b).

2. Dispositif de lubrification (1) selon la revendication 1, **caractérisé en ce que** l'élément de dépôt absorbant (12a, b) présente un matériau poreux, une résine synthétique poreuse, un matériau polymère, un matériau fritté, un matériau de mèche, du caoutchouc mousse et/ou un matériau capillaire.

3. Dispositif de lubrification (1) selon la revendication 1 ou 2, **caractérisé en ce que** les zones de recouvrement (11a, b) se raccordent à des zones fermées (8a, b) des canaux d'amenée de lubrifiant et s'étendent sous la forme de canaux ouverts (10a, b) jusqu'aux passages de sortie libres.

4. Dispositif de lubrification (1) selon l'une quelconque des revendications précédentes, **caractérisé par** deux ou quatre passages de sortie libres.

5. Dispositif de lubrification (1) selon l'une quelconque des revendications précédentes, **caractérisé en ce que** des soupapes anti-retour et/ou des soupapes à une voie sont disposées dans le trajet des canaux d'amenée de lubrifiant (8a, b, 10a, b).

6. Dispositif de lubrification (1) selon l'une quelconque des revendications précédentes, **caractérisé en ce que** ledit au moins un élément de dépôt (12a, b) est recouvert au moins partiellement, dans la direction longitudinale du rail de guidage, par au moins une plaque de protection (14a, b).

7. Dispositif de lubrification (1) selon la revendication 6, **caractérisé en ce que** la plaque de protection (14a, b) se compose, au moins dans une zone de bord ou dans une zone de contact avec le rail de guidage, d'un matériau retenant les particules d'encrassement.

8. Dispositif de lubrification (1) selon l'une quelconque des revendications précédentes, **caractérisé en ce que** l'élément de dépôt (12a, b) est construit en plusieurs couches dans la direction longitudinale du rail de guidage.

9. Dispositif de lubrification (1) selon l'une quelconque des revendications 6 à 8, **caractérisé en ce que** plusieurs éléments de dépôt (12a, b) et plusieurs plaques de protection (14a, b) sont disposés/disposées de manière alternative ou en alternance.

10. Dispositif de lubrification (1) selon l'une quelconque des revendications précédentes, **caractérisé par** un dispositif de réglage, qui est réalisé en vue de déformer l'élément de dépôt (12a, b), de telle manière que la section transversale libre des canaux d'amenée de lubrifiant (10a, b) soit modifiée dans la zone de recouvrement (11a, b).

11. Dispositif de lubrification (1) selon la revendication 10, **caractérisé en ce que** le dispositif de réglage peut être commandé électriquement.

12. Dispositif de lubrification (1) selon la revendication 10 ou 11, **caractérisé en ce qu'**un des dispositifs de réglage est associé à chaque rainure longitudinale du rail de guidage et/ou **en ce qu'**un des dispositifs de réglage est chaque fois associé exclusivement à une rainure longitudinale.

13. Dispositif de lubrification (1) selon l'une quelconque des revendications précédentes, **caractérisé en ce que** le dispositif de lubrification (1) présente une déviation (16) des corps de roulement, qui permet une circulation sans fin des corps de roulement dans le
chariot de guidage, dans lequel des fenêtres (17) pour le transfert de lubrifiant aux corps de roulement sont pratiquées dans la déviation des corps de roulement.

14. Dispositif de lubrification (1) selon l'une quelconque des revendications précédentes, **caractérisé par** une configuration en forme d'étrier, dans lequel les branches libres (4, 5) sont réalisées en vue d'encadrer le rail de guidage.

15. Dispositif de lubrification (1) selon l'une quelconque des revendications précédentes, **caractérisé en ce que**, avant chaque passage de sortie et/ou avant les passages de sortie d'une branche (4, 5) du dispositif de lubrification (1), les canaux d'amenée de lubrifiant (10a, b) présentent un élargissement dans la zone de recouvrement (12a, b), afin d'améliorer le transport du lubrifiant entre les canaux d'amenée de lubrifiant (10a, b) et l'élément de dépôt (12a, b).
